# EUROPÄISCHE PATENTSCHRIFT

(11) **EP 3 989 705 B1**
(45) Veröffentlichungstag und Bekanntmachung des Hinweises auf die Patenterteilung: **16.10.2024**
(21) Anmeldenummer: 20737333.3
(22) Anmeldetag: 24.06.2020
(51) Int. Cl.: A01D 41/14

(54) **SCHNEIDWERK FÜR EINEN MÄHDRESCHER**
CUTTING UNIT FOR A COMBINE HARVESTER
UNITÉ DE COUPE POUR UNE MOISSONNEUSE-BATTEUSE

(30) Priorität: 27.06.2019 AT 505762019
(43) Veröffentlichungstag der Anmeldung: 04.05.2022
(73) Patentinhaber: Schrattenecker, Franz, 4773 Eggerding (AT)
(72) Erfinder: Schrattenecker, Franz, 4773 Eggerding (AT)
(74) Vertreter: Hübscher & Partner Patentanwälte GmbH
(86) Internationale Anmeldenummer: PCT/AT2020/060251
(87) Internationale Veröffentlichungsnummer: WO 2020/257838

(56) Entgegenhaltungen:
- EP-A1- 0 160 823
- EP-A1- 0 765 594
- EP-A1- 2 862 432
- EP-A1- 3 363 276
- AT-A2- 520 625
- US-A- 3 967 437

## Beschreibung

### Technisches Gebiet

Die Erfindung bezieht sich auf ein Schneidwerk für einen Mähdrescher mit einem Tragrahmen für einen Schneidtisch, der schneidseitig einen gelenkig am Rahmen befestigten, quer zur Schnittrichtung flexiblen Schneidbalken aufweist, der mittels mehrerer, über die Schneidwerksbreite verteilt angeordneter, einerends am Schneidbalken und andernends am Rahmen angreifender, Achshebel bezüglich des Rahmens höhenverstellbar ist, wozu den Achshebeln Stelltriebe zwecks Einstellung eines Bodenabstandes zugeordnet sind, wobei die Stelltriebe und damit die Achshebel mit dem Schneidbalken zur Einhaltung eines vorgegebenen Bodenabstandes des Schneidbalkens über die Schneidwerksbreite mit einer Steuerung ansteuerbar sind.

### Stand der Technik

Ein derartiges Schneidwerk ist beispielsweise aus der AT 520 625 A2 bekannt. Für die Ernte verschiedenartiger Früchte ist es oftmals von großem Vorteil, bzw. erforderlich, flexible Schneidbalken vorzusehen, die gegebenenfalls auch auf einen starren Schneidbalken umstellbar sind. Unter einem flexiblen Schneidbalken ist dabei ein sich der Kontur der zu mähenden Oberfläche quer zur Fahrtrichtung des Mähdreschers zumindest im wesentlichen anpassender Schneidbalken zu verstehen, der zu diesem Zweck üblicherweise mittels Federblechen bzw. Längslenkern am Rahmen des Schneidwerkes gehalten ist. Über die Federbleche wird das abgemähte Mähgut mittels Haspel und Förderschnecke einer weiteren Verarbeitung zugeführt. Ein starrer Schneidbalken ist im Gegensatz dazu im Wesentlichen fest, also unbeweglich, am Rahmen montiert. Flexible Schneidbalken sind insbesondere bei Früchten wie Soja, Erbsen u. dgl. oder bei schlechten Erntebedingungen wie Lagergetreide, also bei durch Windeinwirkung flach gelegtem Getreide, und insbesondere bei großen Schneidwerkbreiten erforderlich. Ein über den Boden gleitender Schneidbalken unterliegt naturgemäß einem erhöhten Verschleiß, weshalb ein flexibles Schneidwerk möglichst nur dann eingesetzt werden sollte, wenn die Erntebedingungen dies unbedingt erfordern. Um ein Schneidwerk für einen Mähdrescher zu schaffen, das eine schnelle und einfache Anpassung des Schneidbalkens an die jeweils gegebenen Erntebedingungen, also einen unkomplizierten Wechsel zwischen flexiblem und starrem Schneidebalken ermöglicht, wurde bereits vorgeschlagen (AT 501 588 A), zwischen Rahmen und Schneidbalken wenigstens ein Zugmittel vorzusehen, mit dem der Schneidbalken gegenüber dem Rahmen unter Überwindung der Federkraft aus seiner bezüglich dem Rahmen flexiblen Arbeitslage in eine bezüglich dem Rahmen starre Arbeitslage verlagerbar ist, in welcher starren Arbeitslage der Schneidbalken am Rahmen festgelegt ist.

Die WO 2019111069 A1 offenbart ein Schneidwerk mit Bandförderern, die Schnittgut vom Schneidwerksrand zur Schneidwerksmitte fördern. Zur Einhaltung eines Bodenabstandes sind mehrere Wiegezellen vorgesehen, welche das Gewicht des auf dem Schneidwerk aufliegenden Schnittgutes messen. Ein Durchhängen des Schneidwerkes in Folge der Auflast kann mit den Stelltrieben kompensiert werden. Ein aktives einstellen eines Bodenabstandes ist nicht vorgesehen. Das Schneidwerk kann über den Boden gleiten und kompensiert die aufruhende Gewichtskraft. Eine ähnliche Vorrichtung ist aus der EP 0160823 A2 bekannt.

### Darstellung der Erfindung

Die Aufgabe der Erfindung ist es daher ein Schneidwerk für einen Mähdrescher der eingangs geschilderten Art zu schaffen, das eine schnelle und einfache Anpassung des Schneidbalkens an die jeweils gegebenen Erntebedingungen ermöglicht und dabei für eine annähernd gleichbleibende Schnitthöhe über dem Boden sorgt.

Die Erfindung löst die gestellte Aufgabe dadurch, dass dem Schneidbalken mehrere über die Schneidwerksbreite verteilt angeordnete, den Bodenabstand des Schneidbalkens aufnehmende Sensoren zugeordnet sind, die in Schnittrichtung vor jedem Achshebel am Schneidbalken vorgesehen sind, wobei die Sensoren bodenseitig am Schneidbalken angeordnete Gleitkufen zur Messung des Bodenanpressdrucks der jeweiligen Gleitkufe oder zur Abstandsmessung zwischen Gleitkufe und Schneidbalken sind.

Mit dieser Maßnahme ist eine schnelle und einfache Anpassung des Schneidbalkens an die jeweils gegebenen Erntebedingungen möglich, wobei eine annähernd gleichbleibende Schnitthöhe über dem Boden eingehalten werden kann und das über die gesamte Schneidwerksbreite. Ein Aufschieben von Erde infolge zu geringem Bodenabstand während des Erntevorganges kann somit bei unebenen Böden sicher verhindert werden. Die Sensoren sollten naturgemäß möglichst weit vorne am Schneidwerk angeordnet sein. Denkbar sind auch über das Schneidwerk nach vorne abragende Gleitkufen, denen die Sensoren zugeordnet sind. Der quer zur Fahrtrichtung des Mähdreschers flexible Schneidbalken wird erfindungsgemäß somit in erlaubten Bereichen, beispielsweise ± 10-20cm aus einer Neutrallage heraus, aktiv der Kontur der zu mähenden Oberfläche nachgeführt. Die Steuerung, insbesondere ein Fahrzeugcontroller, steuert die Stelltriebe und damit die Achshebel mit dem Schneidbalken derart an, dass ein von einem Bediener vorgegebener Bodenabstand des Schneidbalkens über die Schneidwerksbreite eingehalten wird und vermeidet dabei insbesondere ein Einschneiden des Schneidbalkens in Erdreich.

Besonders robuste, für den Einsatz an einer Erntemaschine geeignete Sensoren sind bodenseitig am Schneidbalken angeordneten Gleitkufen und messen den Bodenanpressdruck der jeweiligen Gleitkufe mit Wiegezellen oder den Abstand zwischen Gleitkufe und Schneidbalken. Der Anpressdruck einer federnd am Schneidbalken angeordneten Gleitkufe entspricht dem Abstand bzw. lässt sich in den Abstandswert umrechnen.

Für ein bestmögliches Schnittergebnis und für eine optimale Bodennachführung des Schneidbalkens ist es von Vorteil, dass in Schnittrichtung vor jedem Achshebel je wenigstens ein Sensor am Schneidbalken vorgesehen ist.

Von besonderem Vorteil ist es, wenn die Achshebel als Gelenkparallelogramme ausgebildet sind, die einerends am Schneidbalken und andernends am Rahmen angreifen. Damit ist der Schneidbalken im Zuge der Bodennachführung stets bodenparallel ausgerichtet und ergibt sich unabhängig vom Bodenabstand ein gleichleibender Schnittwinkel. Zudem wird damit eine Verwindung des Schneidbalkens quer zur Schnittrichtung, um eine Schneidwerkquerachse, vermieden, womit der Schneidwerksverschleiß und die erforderliche Antriebsleistung verringert werden.

Um der Kontur der zu mähenden Oberfläche sauber folgen zu können und dabei übermäßige Spannungen im Schneidbalken zu vermeiden können die Achshebel über Ausgleichslager mit zur Schnittrichtung paralleler Schwenkachse am Schneidbalken angreifen.

Robuste und einfach zu wartende Konstruktionsverhältnisse ergeben sich, wenn die die Stelltriebe einerseits am Rahmen und anderseits am Achshebel angreifen.

Um bei einem Schneidwerk mit einer mit einer Schnittguteinzugshaspel deren Abstand zum Schneidbalken mit einer Höhenverstellung einstellbar ist einen unerwünschten Kontakt mit dem Schneidbalken zu vermeiden, wird vorgeschlagen, dass der Schnittguteinzugshaspel ein Lagesensor zugeordnet ist, und dass mit der Steuerung die Höhenverstellung und damit die Schnittguteinzugshaspel derart ansteuerbar sind, dass ein vorgegebener Mindestabstand zwischen Schneidbalken und Schnittguteinzugshaspel eingehalten ist. Soll eine gegebenenfalls Haspel oder Messer beschädigender Kontakt vermieden werden, ermittelt ein Sensor die jeweilige Position der Haspel und hebt diese bei sich ankündigender Kollision entsprechend an und somit aus dem Gefahrenbereich. Die Höhenverstellung kann aus einem oder aus zwei seriell geschalteten Hydraulikzylindern bestehen. Sind zwei Hydraulikzylinder vorgesehen übernimmt einer die von einem Bediener vorgebbare Grobeinstellung und sorgt der andere mittels der Steuerung für die automatische Lagekorrektur. Damit ist sichergestellt, dass ein Abschneiden von Schnittguteinzugshaspelzinken mit dem Schneidbalken vermieden wird, auch wenn ein Bediener die Haspel durch manuelle Vorgabe maximal möglich am Boden halten will. Die beschriebene Steuerung der Höhenverstellung für die Schnittguteinzugshaspel kann bei jedem bekannten Schneidwerk mit quer zur Schnittrichtung flexiblen Schneidbalken eingesetzt werden.

Der Tragrahmen mit Schneidbalken und Stelltrieben kann vorzugsweise zwecks Einstellung einer Schneidtischlänge in Schnittrichtung längsverschiebbar an einem die Schnittguteinzugsvorrichtung tragenden Grundrahmen geführt sein.

Die Stelltriebe werden vorzugsweise insbesondere von Pneumatikzylindern bzw. Pneumatikbälgen gebildet, welche sich einerseits am Tragrahmen abstützen und welche anderseits an einem Achshebel zwischen einem Tragrahmenlager der Achshebel und dem Schneidbalken angreifen. Beidseits der Achshebel können Stelltriebe vorgesehen sein, die über eine die Achshebel überspannende Brücke gekoppelt sind, wobei die Bücke am zugeordneten Achshebel mittels entsprechenden Mitteln angreift.

Damit ist der Stelltrieb bei geringem Platzbedarf in einen längsverschiebbar am Grundrahmen geführten Tragrahmen integrierbar und ist die Schneidtischlänge zudem innerhalb vorgegebener Grenzen beliebig einstellbar.

### Kurze Beschreibung der Erfindung

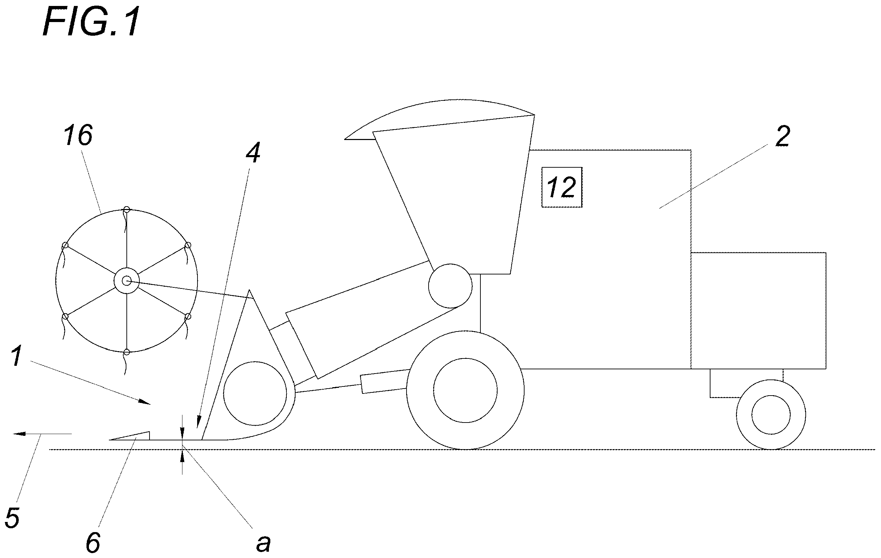

In der Zeichnung ist der Erfindungsgegenstand beispielsweise dargestellt. Es zeigen
- Fig. 1: Mähdrescher mit einem Schneidwerk in Seitenansicht,
- Fig. 2: ein erfindungsgemäßes Schneidwerk in teilgeschnittener Seitenansicht,

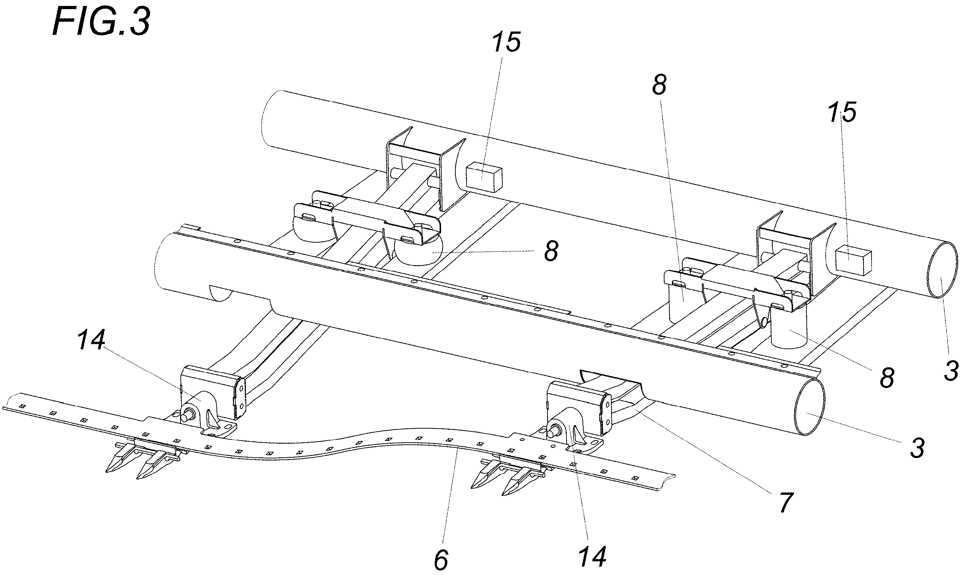

- Fig. 3: einen vergrößerten Ausschnitt einer Schneidbalkenaufhängung des Schneidwerkes aus Fig. 2 in Schrägansicht und

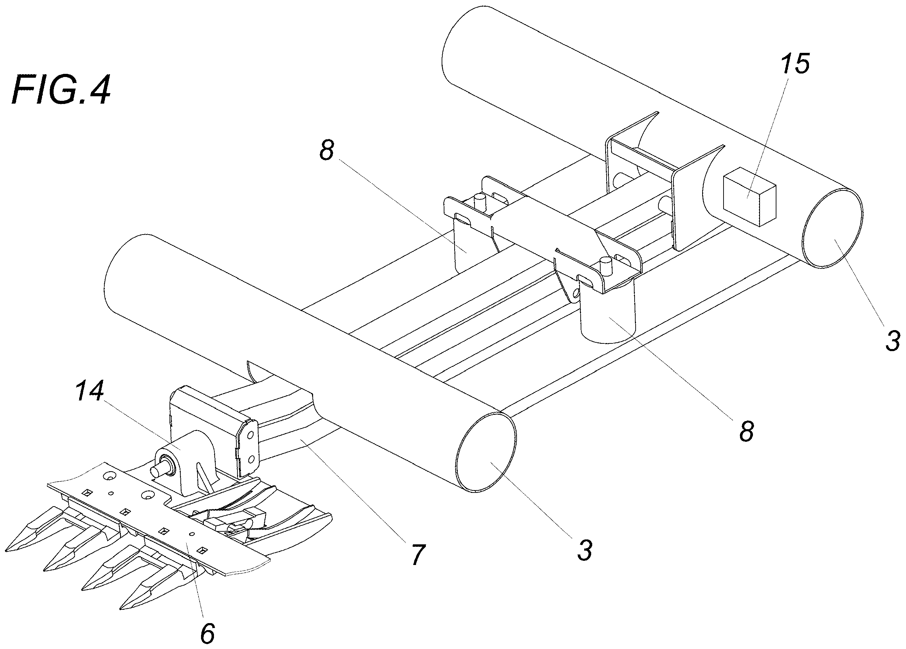

- Fig. 4: einen vergrößerten Ausschnitt der Schneidbalkenaufhängung aus Fig. 3 in Schrägansicht

### Wege zur Ausführung der Erfindung

Ein Schneidwerk 1 für einen Mähdrescher 2 umfasst einen Tragrahmen 3 für einen Schneidtisch 4, der schneidseitig einen gelenkig am Tragrahmen 3 befestigten, quer zur Schnittrichtung 5 flexiblen Schneidbalken 6 aufweist. Der Schneidbalken 6 ist mittels mehrerer, über die Schneidwerksbreite verteilt angeordneter, einerends am Schneidbalken 6 und andernends am Tragrahmen 3 angreifender, Achshebel 7 bezüglich des Tragrahmens 3 höhenverstellbar. Zwecks Einstellung eines Bodenabstandes sind den Achshebeln 7 Stelltriebe 8 zugeordnet mit denen die Höhenlage des Schneidbalkens 6 über die Schneidbalkenbreite variabel bezüglich des Tragrahmens 3 einstellbar ist. Zur Überleitung des Schnittgutes vom Schneidbalken 6 weg zu einer Schnittguteinzugsvorrichtung 9 hin sind entsprechende flexible Übergangsbleche 10 vorgesehen.

Die Stelltriebe 8 werden insbesondere von Pneumatikzylindern bzw. Pneumatikbälgen gebildet, welche sich einerseits am Tragrahmen 3 abstützen und welche anderseits an einem Achshebel 7 zwischen einem Tragrahmenlager und dem Schneidbalken 6 angreifen. Dazu sind beidseits der Achshebel 7 Stelltriebe 8 vorgesehen, die über eine die Achshebel 7 überspannende Brücke gekoppelt sind, wobei die Bücke am zugeordneten Achshebel 7 angreift. Der Tragrahmen 3 kann mit Schneidbalken 6 und Stelltrieben 8 zwecks Einstellung der Schneidtischlänge in Schnittrichtung längsverschiebbar an einem die Schnittguteinzugsvorrichtung 9 tragenden Grundrahmen geführt sein. Damit ist der Stelltrieb bei geringem Platzbedarf in einen längsverschiebbar am Grundrahmen geführten Tragrahmen 3 integrierbar und ist die Schneidtischlänge zudem innerhalb vorgegebener Grenzen beliebig einstellbar. Im Bereich des Schneidtisches sind dazu einander dachschindelartig überlappende Überleitbleche für das Mähgut vorgesehen, welche den Längenausgleich erlauben.

Erfindungsgemäß sind dem Schneidbalken 6 mehrere über die Schneidwerksbreite verteilt angeordnete, den Bodenabstand des Schneidbalkens 6 aufnehmende Sensoren 11 zugeordnet. Eine Steuerung 12 steuert die Stelltriebe 8 und damit die Achshebel 7 mit dem Schneidbalken 6 derart an, dass ein vorgegebener Bodenabstand a des Schneidbalkens 6 über die Schneidwerksbreite eingehalten ist.

Die Sensoren 11, insbesondere Wiegezellen, sind bodenseitig am Schneidbalken 6 angeordnete Gleitkufen 13 und messen den Bodenanpressdruck der jeweiligen Gleitkufe 13 oder messen den Abstand zwischen Gleitkufe 13 und Schneidbalken 6. In Schnittrichtung 5 ist vor jedem Achshebel 7 je wenigstens ein Sensor 11 am Schneidbalken 6 vorgesehen.

Die Achshebel 7 sind als Gelenkparallelogramme ausgebildet, die einerends am Schneidbalken 6 und andernends am Rahmen 3 angreifen und in entsprechenden Lagerböcken gelagert sind. Zudem greifen die Achshebel 7 über Ausgleichslager 14 mit zur Schnittrichtung 5 paralleler Schwenkachse am Schneidbalken 6 an, der in den Fig. nur sehr schematisch dargestellt ist. Die Stelltriebe 8, beispielsweise Hydraulizylinder, greifen einerseits am Tragrahmen 3 und anderseits am Achshebel 7 an. Mit Lagesensoren 15 kann die Schwenklage der Achshebel 7 erfasst werden.

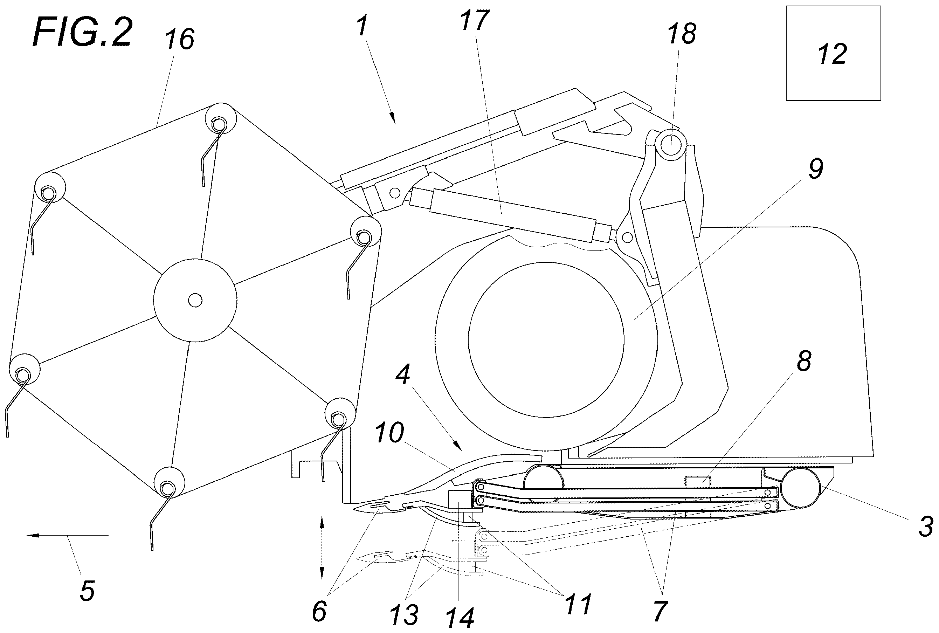

Fig. 2 zeigt ein Schneidwerk mit einer Schnittguteinzugshaspel 16 deren Abstand zum Schneidbalken 6 mit einer Höhenverstellung 17 einstellbar ist, wobei der Schnittguteinzugshaspel 16 ein Lagesensor 18 zugeordnet ist, und wobei die Steuerung 12 die Höhenverstellung 17 und damit die Schnittguteinzugshaspel 16 derart ansteuert, dass ein vorgegebener Mindestabstand zwischen Schneidbalken 6 und Schnittguteinzugshaspel 16 eingehalten ist. Die Höhenverstellung 17 kann aus einem oder aus zwei seriell geschalteten Hydraulikzylindern bestehen. Sind zwei Hydraulikzylinder vorgesehen übernimmt einer die von einem Bediener vorgebbare Grobeinstellung und sorgt der andere mittels der Steuerung 12 für die automatische Lagekorrektur.

## Patentansprüche

1. Schneidwerk (1) für einen Mähdrescher (2) mit einem Tragrahmen (3) für einen Schneidtisch (4), der schneidseitig einen gelenkig am Tragrahmen (3) befestigten, quer zur Schnittrichtung (5) flexiblen Schneidbalken (6) aufweist, der mittels mehrerer, über die Schneidwerksbreite verteilt angeordneter, einerends am Schneidbalken (6) und andernends am Tragrahmen (3) angreifender, Achshebel (7) bezüglich des Tragrahmen (3) höhenverstellbar ist, wozu den Achshebeln (7) Stelltriebe (8) zwecks Einstellung eines Bodenabstandes zugeordnet sind, wobei die Stelltriebe (8) und damit die Achshebel (7) mit dem Schneidbalken (6) zur Einhaltung eines vorgegebenen Bodenabstandes des Schneidbalkens (6) über die Schneidwerksbreite mit einer Steuerung (12) ansteuerbar sind, **dadurch gekennzeichnet, dass** dem Schneidbalken (6) mehrere über die Schneidwerksbreite verteilt angeordnete, den Bodenabstand des Schneidbalkens (6) aufnehmende Sensoren (11) zugeordnet sind, die in Schnittrichtung (5) vor jedem Achshebel (7) am Schneidbalken (6) vorgesehen sind, wobei die Sensoren (11) bodenseitig am Schneidbalken (6) angeordnete Gleitkufen (13) zur Messung des Bodenanpressdrucks der jeweiligen Gleitkufe (13) oder zur Abstandsmessung zwischen Gleitkufe (13) und Schneidbalken (6) sind.

2. Schneidwerk nach Anspruch 1, **dadurch gekennzeichnet, dass** die Achshebel (7) als Gelenkparallelogramme ausgebildet sind, die einerends am Schneidbalken (6) und andernends am Tragrahmen (3) angreifen.

3. Schneidwerk nach Anspruch 1 oder 2, **dadurch gekennzeichnet, dass** die Achshebel (7) über Ausgleichslager (14) mit zur Schnittrichtung (5) paralleler Schwenkachse am Schneidbalken (6) angreifen.

4. Schneidwerk nach einem der Ansprüche 1 bis 3, **dadurch gekennzeichnet, dass** die Stelltriebe (8) einerseits am Tragrahmen (3) und anderseits am Achshebel (7) angreifen.

5. Schneidwerk nach einem der Ansprüche 1 bis 4, mit einer Schnittguteinzugshaspel (16) deren Abstand zum Schneidbalken (6) mit einer Höhenverstellung (17) einstellbar ist, **dadurch gekennzeichnet, dass** der Schnittguteinzugshaspel (16) ein Lagesensor (18) zugeordnet ist, und dass die Steuerung (12) die Höhenverstellung (17) und damit die Schnittguteinzugshaspel (16) derart ansteuert, dass ein vorgegebener Mindestabstand zwischen Schneidbalken (6) und Schnittguteinzugshaspel (16) eingehalten ist.

6. Schneidwerk nach Anspruch 5, **dadurch gekennzeichnet, dass** die Höhenverstellung (17) aus zwei seriell geschalteten Hydraulikzylindern je Schnittguteinzugshaspelseite bestehen.

7. Schneidwerk nach einem der Ansprüche 1 bis 6, **dadurch gekennzeichnet, dass** der Tragrahmen (3) mit Schneidbalken (6) und Stelltrieben (8) zwecks Einstellung einer Schneidtischlänge in Schnittrichtung längsverschiebbar an einem die Schnittguteinzugsvorrichtung (9) tragenden Grundrahmen geführt ist.

8. Schneidwerk nach einem der Ansprüche 1 bis 7, **dadurch gekennzeichnet, dass** die Stelltriebe (8) insbesondere von Pneumatikzylindern bzw. Pneumatikbälgen gebildet sind, welche sich einerseits am Tragrahmen (3) abstützen und welche anderseits an einem Achshebel (7) zwischen einem Tragrahmenlager der Achshebel (7) und dem Schneidbalken (6) angreifen.

9. Schneidwerk nach Anspruch 8, **dadurch gekennzeichnet, dass** beidseits der Achshebel (7) Stelltriebe (8) vorgesehen sind, die über eine die Achshebel (7) überspannende Brücke gekoppelt sind, wobei die Bücke am zugeordneten Achshebel (7) angreift.

## Claims

1. Cutting system (1) for a combine harvester (2), having a support frame (3) for a cutting table (4), which has, on the cutting side, a cutting bar (6) which is fastened in an articulated manner to the support frame (3), is flexible transversely to the cutting direction (5) and can be adjusted in height with respect to the support frame (3) by means of a plurality of axle levers (7) which are arranged distributed over the width of the cutting system and engage at one end on the cutting bar (6) and at the other end on the support frame (3), for which purpose actuators (8) are associated with the axle levers (7) for the purpose of setting a ground clearance, wherein the actuators (8) and thus the axle levers (7) with the cutting bar (6) are controllable by a controller (12) for maintaining a predetermined ground clearance of the cutting bar (6) over the cutting bar width, **characterized in that** the cutting bar (6) is assigned a plurality of sensors (11) which are arranged in a distributed manner over the width of the cutting system, record the ground clearance of the cutting bar (6) and are provided in the cutting direction (5) in front of each axle lever (7) on the cutting bar (6), wherein the sensors (11) are skids (13) arranged on the bottom side of the cutting bar (6) for measuring the ground contact pressure of the respective skid (13) or for measuring the distance between the skid (13) and the cutting bar (6).

2. Cutting system according to claim 1, **characterized in that** the axle levers (7) are designed as articulated parallelograms which engage at one end on the cutting bar (6) and at the other end on the support frame (3).

3. Cutting system according to claim 1 or 2, **characterized in that** the axle levers (7) engage on the cutting bar (6) via compensating bearings (14) with a pivot axis parallel to the cutting direction (5).

4. Cutting system according to one of the claims 1 to 3, **characterized in that** the actuators (8) engage on the one hand on the support frame (3) and on the other hand on the axle lever (7).

5. Cutting system according to one of the claims 1 to 4, with a cut material intake reel (16), the distance of which from the cutting bar (6) can be adjusted by means of a height adjustment (17), **characterized in that** a position sensor (18) is associated with the cut material intake reel (16), and **in that** the controller (12) controls the height adjustment (17) and thus the cut material intake reel (16) in such a way that a predetermined minimum distance between the cutting bar (6) and the cut material intake reel (16) is maintained.

6. Cutting system according to claim 5, **characterized in that** the height adjustment (17) consists of two serially connected hydraulic cylinders for each cut material intake reel side.

7. Cutting system according to one of the claims 1 to 6, **characterized in that** the support frame (3) with the cutting bar (6) and actuators (8) is guided longitudinally displaceably in the cutting direction on a base frame carrying the cut material intake device (9) for the purpose of setting a cutting table length.

8. Cutting system according to one of the claims 1 to 7, **characterized in that** the actuators (8) are formed in particular by pneumatic cylinders or pneumatic bellows which are supported on the one hand on the support frame (3) and which engage on the other hand on an axle lever (7) between a support frame bearing of the axle lever (7) and the cutting bar (6).

9. Cutting system according to claim 8, **characterized in that** actuators (8) are provided on both sides of the axle levers (7) and are coupled via a bridge spanning the axle levers (7), wherein the bridge engages the associated axle lever (7).

## Revendications

1. Outil de coupe (1) pour une moissonneuse-batteuse (2) comprenant un cadre de support (3) pour une table de coupe (4) qui présente, du côté de coupe, une barre de coupe (6) flexible transversalement à la direction de coupe (5) qui est fixée de façon articulée au cadre de support (3) et qui peut être réglée en hauteur par rapport au cadre de support (3) au moyen de plusieurs leviers axiaux (7) répartis sur la largeur de l'outil de coupe qui s'engagent à une première extrémité avec la barre de coupe (6) et à l'autre extrémité avec le cadre de support (3), dans lequel des mécanismes de réglage (8) sont associés aux leviers axiaux (7) dans le but de régler une distance au sol, et dans lequel les mécanismes de réglage (8) et par conséquent les leviers axiaux (7) avec la barre de coupe (6) peuvent être commandés par l'intermédiaire d'une commande (12) dans le but de maintenir une distance au sol prédéterminée de la barre de coupe (6) sur la largeur de la barre de coupe, **caractérisé en ce que** plusieurs capteurs (11) répartis sur la largeur de l'outil de coupe et qui enregistrent la distance au sol de la barre de coupe (6) sont associés à la barre de coupe (6) et sont prévus dans la direction de coupe (5) avant chaque levier axial (7) sur la barre de coupe (6), et dans lequel les capteurs (11) sont des patins (13) disposés du côté du sol sur la barre de coupe (6) dans le but de mesurer la pression d'application au sol du patin respectif (13) ou de mesurer la distance entre le patin (13) et la barre de coupe (6).

2. Outil de coupe selon la revendication 1, **caractérisé en ce que** les leviers axiaux (7) sont réalisés sous la forme de parallélogrammes articulés qui agissent à une première extrémité sur la barre de coupe (6) et à l'autre extrémité sur le cadre de support (3).

3. Outil de coupe selon la revendication 1 ou 2, **caractérisé en ce que** les leviers axiaux (7) agissent sur la barre de coupe (6) par l'intermédiaire de paliers de compensation (14) dont l'axe de pivotement est parallèle à la direction de coupe (5).

4. Outil de coupe selon l'une quelconque des revendications 1 à 3, **caractérisé en ce que** les mécanismes de réglage (8) agissent d'une part sur le cadre de support (3) et d'autre part sur les leviers axiaux (7).

5. Outil de coupe selon l'une quelconque des revendications 1 à 4, comprenant une bobine d'alimentation en produit de coupe (16) dont la distance par rapport à la barre de coupe (6) est réglable par l'intermédiaire d'un dispositif de réglage en hauteur (17), **caractérisé en ce qu'**un capteur de position (18) est associé à la bobine d'alimentation en produit de coupe (16), et **en ce que** la commande (12) commande le dispositif de réglage en hauteur (17) et de ce fait la bobine d'alimentation en produit de coupe (16) de telle sorte qu'une distance minimale prédéterminée entre la barre de coupe (6) et la bobine d'alimentation en produit de coupe (16) soit respectée.

6. Outil de coupe selon la revendication 5, **caractérisé en ce que** le dispositif de réglage en hauteur (17) est constitué de deux vérins hydrauliques qui sont montés en série pour chaque côté de la bobine d'alimentation en produit de coupe.

7. Outil de coupe selon l'une quelconque des revendications 1 à 6, **caractérisé en ce que** le cadre de support (3) avec la barre de coupe (6) et les mécanismes de réglage (8) est guidé de manière à pouvoir être déplacé de façon longitudinale dans la direction de coupe sur un cadre de base portant le dispositif d'alimentation en produit de coupe (9) dans le but de régler une longueur de la table de coupe.

8. Outil de coupe selon l'une quelconque des revendications 1 à 7, **caractérisé en ce que** les mécanismes de réglage (8) sont en particulier constitués par des vérins pneumatiques ou par des soufflets pneumatiques qui, d'une part, s'appuient sur le cadre de support (3) et qui, d'autre part, agissent sur un levier axial (7) entre un palier de cadre de support des leviers axiaux (7) et la barre de coupe (6).

9. Outil de coupe selon la revendication 8, **caractérisé en ce que** des mécanismes de réglage (8) sont prévus de part et d'autre des leviers axiaux (7) et sont couplés par l'intermédiaire d'un pont enjambant les leviers axiaux (7), et dans lequel le pont s'engage sur le levier axial associé (7).
